# EUROPÄISCHE PATENTANMELDUNG

(11) **EP 3 379 076 A1**
(43) Veröffentlichungstag der Anmeldung: **26.09.2018**
(21) Anmeldenummer: 18162701.9
(22) Anmeldetag: 20.03.2018
(51) Int. Cl.: F03D 80/00, F03D 9/28

(54) **WINDKRAFTANLAGE**

(30) Priorität: 22.03.2017 SK 702017
(71) Anmelder: Mika, Stanislav, 97401 Banska Bystrica (SK)
(72) Erfinder: Mika, Stanislav, 97401 Banska Bystrica (SK)
(74) Vertreter: Jeck, Anton

(57) **Zusammenfassung**

Die Erfindung betrifft eine multifunktionelle Windkraftanlage aufweisend mindestens einen Rotor mit entweder einer horizontalen oder einer vertikalen Drehachse sowie mit mindestens einem Rotorblatt, wobei die Anlage mindestens eine Düse und mindestens ein Zufuhrmittel für ein Medium aufweist, das durch die Düse freigesetzt wird. Das zu den richtungseingestellten Düsen zugeführte Medium ermöglicht eine bessere Nutzung der Windenergie, indem die Windkraftanlage weitere Funktionen erfüllt, nämlich als Stromerzeugungsanlage, Bewässerungsanlage, Feuerbarriere, Lärmschutzwand sowie zur künstliche Schneeerzeugung und dgl.

## Beschreibung

Die Erfindung betrifft eine Windkraftanlage gemäß dem Oberbegriff des Anspruchs 1. Insbesondere eine Windkraftanlage mit entweder einer horizontalen oder vertikalen Drehachse, deren Windstärkenbereich vergrößert werden soll, die zusätzlich zur durch Windkraft erzeugten Energie weitere elektrische Energie mithilfe von an den Rotorblättern der Windkraftanlage angeordneten Düsen erzeugt, die auch andere die Umwelt beeinflussende Funktionen erfüllen kann, beispielsweise Bewässerung, Kunstschneeproduktion, Bildung einer Lärmschutzbarriere, Bildung einer Flammenschutzbarriere, Verminderung der Windkraft, Beeinflussung der Mikroklimaauswirkung und andere Funktionen. Bei massivem Einsatz kann das Abschmelzen der von der Erderwärmung betroffenen Gletscher direkt beeinflusst werden, um dadurch das Auftreten extremer Wetterschwankungen zu verlangsamen.

Derzeit werden Windkraftanlagen monofunktional nur zur Stromerzeugung eingesetzt. Windkraftanlagen können dabei nur innerhalb eines bestimmten Windstärkebereichs eingesetzt werden. Bei Windstärken außerhalb dieses Bereichs werden sie nicht eingeschaltet bzw. ausgeschaltet, da ansonsten der zulässige Betriebsparameterbereich verlassen wird und sie entweder unwirtschaftlich arbeiten oder die Anlage gefährdet wird. Darüber hinaus werden sie in der landwirtschaftlichen Flächennutzung in der Regel als Hindernis ohne positiven Einfluss auf die landwirtschaftliche Produktion angesehen. Zugleich verursacht die Rotation von Turbinenblättern im Störgeräusche, welche die Umwelt, insbesondere Mensch und Tier, schädigen können.

Der Erfindung liegt daher die Aufgabe zugrunde bestehende Windkraftanlagen zu verbessern, in dem die oben genannten Nachteile zumindest gemildert oder beseitigt werden oder zusätzliche Funktionalitäten ökologisch und ökonomisch vorteilhaft nutzbar sind.

Diese Aufgabe wird durch die Merkmale des Anspruchs 1 gelöst. Dabei weist eine Windkraftanlage mindestens einen Rotor mit entweder horizontaler oder vertikaler Drehachse und mit mindestens einem Rotorblatt auf, wobei sie mindestens eine Düse und mindestens ein Zufuhrmittel eines Mediums aufweist, das durch die Düse freigesetzt wird.

Weitere Verbesserungen ergeben sich aus den Merkmalen der Unteransprüche. Eine erste für die Funktion vorteilhafte Ausgestaltung der Erfindung mit den Merkmalen des Anspruchs 2 sieht vor, dass die Düse an dem Rotorblatt des Rotors angeordnet ist und dass sie entweder in Drehrichtung oder gegen die Drehrichtung des Rotors gerichtet ist.

Eine zweite für die Funktion vorteilhafte Ausgestaltung der Erfindung mit den Merkmalen des Anspruchs 3 sieht vor, dass das Zufuhrmittel starr und / oder flexibel und röhrenartig ist und dass das Zufuhrmittel mindestens durch die Rotordrehachse und wahlweise durch das Rotorblatt geführt ist.

Eine dritte für die Funktion vorteilhafte Ausgestaltung der Erfindung mit den Merkmalen des Anspruchs 4 sieht vor, dass die Düse fest oder drehbar positioniert ist, um die Richtung des ausströmenden Mediums zu ändern, und dass ihre Düsenöffnung konstant oder verstellbar ist.

Eine vierte für die Funktion vorteilhafte Ausgestaltung der Erfindung mit den Merkmalen des Anspruchs 5 sieht vor, dass sie eine Pumpe und / oder Kompressor zur Erhöhung des Druckes des Mediums aufweist und / oder dass das Medium temperierbar ist.

Eine fünfte für die Funktion und Sicherheit vorteilhafte Ausgestaltung der Erfindung mit den Merkmalen des Anspruchs 6 sieht vor, dass die Düse an dem Rotorblatt an dessen Vorderseite und / oder Rückseite angeordnet ist

Eine sechste für die Funktion und Sicherheit vorteilhafte Ausgestaltung der Erfindung mit den Merkmalen des Anspruchs 7 sieht vor, dass die Düse an dem Rotorblatt an einer Stelle angeordnet ist, an der sie ein großes Drehmoment erzeugt.

Eine siebte für die Funktion vorteilhafte Ausgestaltung der Erfindung mit den Merkmalen des Anspruchs 8 sieht vor, dass das Medium flüssig oder gasförmig ist, feine Feststoffpartikel aufweist oder eine Mischung davon ist.

Die eingangs genannten Nachteile werden im Wesentlichen durch die Erfindung der multifunktionalen Windkraftanlage beseitigt, deren Turbine entweder eine horizontale oder eine vertikale Drehachse hat. Das Prinzip der Erfindung liegt darin, dass auf den zuvor verwendeten Arten von Windkraftanlagen Düsen entweder auf den Masten oder bevorzugt auf den Rotorblättern angeordnet sind, die mit einem oder mehreren Medien, wie Wasser, Dampf und anderen flüssigen und gasförmigen Stoffen, gegebenenfalls in ihrer Kombination mit einer Feinfraktion von Feststoffen, in Abhängigkeit von der beanspruchten zusätzlichen Funktion der Windkraftanlage beaufschlagt werden. Auf dem Rotorblatt sind sie so eingeordnet, dass nach dem Öffnen der Medien-Zufuhr die Düsen in Betrieb gesetzt werden können und in Abhängigkeit von derer Ausströmungsrichtung die Drehung der Windkraftanlage entweder beschleunigt oder verzögert ist. Die Düsen können sowohl mit einer bestimmten Ausströmungsrichtung als auch mit einer bestimmten Düsenöffnungsgröße konstant oder beweglich montiert sein, wobei bewegliche Düsen bedarfsabhängig gesteuert sein können.

Bei den momentan betriebenen Windkraftanlagen können nur auf ihrem Mast Düsen nachträglich installiert werden, um zusätzliche Funktionalitäten zu erhalten. Eine Platzierung der Düsen auf den Windanlagenrotor ist ohne großen Aufwand nur während dessen Produktion möglich.

Die erfindungsgemäße multifunktionale Windkraftanlage kann jederzeit natürlich auch als herkömmliche Windkraftanlage ohne zusätzliche Funktionalität verwendet werden, wenn keine Medienzufuhr erfolgt. Die Inbetriebnahme der Düsen kann in den Fällen erfolgen, wenn der Wind zu schwach oder zu kräftig weht oder falls andere zusätzliche Funktionen benötigt werden. In diesen Fällen sind dann die Düsen mit ihren Ausströmungsrichtungen entweder zur Unterstützung der Rotordrehung entgegen der Drehrichtung oder in Richtung der Drehrichtung ausgerichtet. Dies ermöglicht den Betrieb der Windkraftanlage auch außerhalb der Betriebsgrenzen herkömmlicher Windkraftanlagen. Mit Hilfe der Düsen können aber auch Bewässerungs-, Beschneiungs, Entfrostungs- oder Feuerlösch- bzw. Feuerschutzfunktionen ausgeführt werden.

Die Düsen können an der Vorderseite und / oder an der Rückseite der Rotorblätter angeordnet sein, wodurch eine dynamisch bedingte Dehnung des Rotorblatts infolge der Windkrafteinwirkung vermindert wird. Durch den Betrieb der Düse wird also die Gefahr einer Verformung oder Beschädigung der Rotorblätter durch Windeinwirkung reduziert. Die Düsen können auch zu Erhöhung des Antriebs- bzw. Brems-Drehmoments an den äußeren Bereichen der Rotorblätter angeordnet sein.

Zu den weiteren Funktionen, die eine multifunktionale Windkraftanlage erfüllen kann, zählt eine direkte positive Beeinflussung der landwirtschaftlichen Produktion bzw. der Landschaft an sich. Durch die Düsen kann Wasser zur Bewässerung von Landflächen ausgebracht werden oder im Fall eines drohenden Frostes kann zerstäubtes Wasser oder durch eine Temperierung erzeugter Wasserdampf den Schutz von Pflanzen vor dem Frost gewährleisten. Im Frostfall kann die Windkraftanlage auch künstlichen Schnee produzieren, um als Schutz der Vegetation vor Kahlfrost zu dienen. Der erzeugte Kunstschnee kann aber auch für sportliche Aktivitäten verwendet werden. Nicht zuletzt kann eine Bewässerung oder die Herstellung von Kunstschnee auch zur Erzeugung oder Erhaltung eines Mikroklimas dienen - beispielsweise bei der Verringerung von extremen Frösten oder bei Reduzierung der extrem hohen Mikroklima-Temperaturen. Mittels der Herstellung vom Kunstschnee kann sogar die Verdunstung brauchbare Nässe in der natürlichen Umgebung verzögert werden.

Durch den durch die Windkraftanlagen erzeugbaren Spritznebel kann weiterhin eine Brandschutzbarriere in waldbrandgefährdeten Gebieten oder eine Lärmschutzbarriere erschaffen werden. Die Kombination der Erzeugung von Strom mit zusätzlichen Funktionalitäten bietet somit einige Vorteile gegenüber herkömmlichen Anlagen.

Die Erfindung wird nun anhand von Ausführungsbeispielen näher erläutert. Es zeigen:

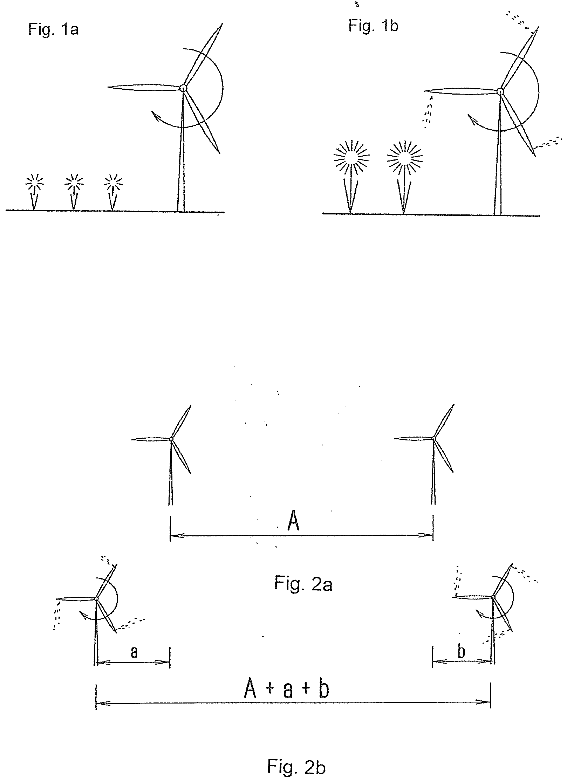

- Fig. 1a: eine herkömmliche Windkraftanlage,
- Fig. 1 b: eine Windkraftanlage mit zusätzlicher Bewässerungsfunktion,
- Fig. 2a: eine herkömmliche Windkraftanlage mit Abstand A,
- Fig. 2b: eine Windkraftanlage mit zusätzlichem Fluiddüsenantrieb und Abstand A+a+b,
- Fig. 3a: ein Skigebiet mit herkömmlichen Schneekanonen,
- Fig. 3b: ein Skigebiet mit Windkraftanlagen mit zusätzlicher Kunstschneeerzeugungsfunktion,
- Fig. 4: eine Reihe von Windkraftanlagen mit Feuerschutzbarrierenfunktion,
- Fig. 5a: eine unfruchtbare Wüstengegend,
- Fig. 5b: eine durch Windkraftanlagen mit zusätzlicher Bewässerungsfunktion nutzbar gemachte ehemalige Wüstengegend.

### Beispiel 1

Eine klassische Windkraftanlage kann erfindungsgemäß mit Düsen an ihrem Mast und zusätzlich mit einem Medien-Zufuhrmittel zu den Düsen nachgerüstet werden, welches eine starre und / oder flexible und röhrenartige Form aufweist. In diesem Beispiel wird eine Wasserzufuhr bereitgestellt, so dass die Windkraftanlage neben der Stromerzeugung auch eine Bewässerungsfunktion der umliegenden Felder erfüllen oder als Frostschutz dienen kann. Die Düsen können auch angepasst sein, um Kunstschnee zu erzeugen oder andere Funktionen auszuführen. Die Düsen können natürlich auch bereits während des Produktionsprozesses an den Rotorblättern einer neuen Windkraftanlage angeordnet werden. Die Zufuhr des Mediums erfolgt dabei zentral über die Rotornabe und verzweigt anschließend in die Rotorblätter, um die Zufuhr des Wassers an den Düsen sicherzustellen. Die Figuren 1a und 1b zeigen eine herkömmliche aus dem Stand der Technik bekannte Windkraftanlage und eine erfindungsgemäße Windkraftanlage mit an den Rotorblättern angeordneten Düsen. Bei der Ausführungsform nach Figur 1b können weitere Ausführungen der Rotorblätter Düsen oder Turbinen aufweisen.

### Beispiel 2

Eine multifunktionale Windkraftanlage, die aus einer klassischen Windkraftanlage mit horizontaler Drehachse besteht, ist zusätzlich auf den Rotorblättern mit fest gerichteten Düsen mit einer Wasserzufuhr versehen, die gegen die Richtung der Rotordrehung gerichtet sind. Die Zufuhr vom Druckwasser zu diesen Düsen wird in diesem Fall geöffnet, wenn die Windkraft allein noch nicht das erforderliche Niveau erreicht. Der Druck des aus der Düse ausströmenden Wassers kann dabei über eine Pumpe oder einen Kompressor eingestellt werden. Mit Hilfe des Düsenbetriebs kann dennoch die Windkraftanlage betrieben werden. Das dazu notwendige Druckwasser kann beispielsweise aus einem höher gelegenen Reservoir entnommen werden, wodurch keine zusätzliche Energie für die Förderung des Wassers bereitgestellt werden muss. Gleichzeitig wird die Bewässerung der angrenzenden landwirtschaftlichen Flächen durch das Sprühen von Wasser aus den Düsen sichergestellt. Die Figuren 2a und 2b zeigen eine herkömmliche Windkraftanlage, die bei zu geringem Wind stillsteht, und eine erfindungsgemäße Windkraftanlage, die mit Hilfe der Düsen in diesem Fall dennoch drehen kann und Strom erzeugt. Die Ausführungsform nach Figur 2a ist effektiv sowohl bei minimaler als auch bei maximaler Windgeschwindigkeit. Falls eine künstliche Bewässerung bei ausreichender Windkraft erforderlich ist und das Wasser mittels z. B. einer Pumpe oder eines Kompressors gefördert werden muss, können die Kosten für die Pumpenergie durch den mittels der Windkraftanlage erzeugten Strom reduziert werden. An den Rotorblättern sind ebenfalls Düsen anordenbar, deren Ausströmungsrichtungen in die Drehrichtung der Windkraftanlage gerichtet sind. Durch diese kann Druckwasser geleitet werden, wenn die Windkraft sich der oberen Betriebsgrenze der Windkraftanlage nähert oder diese überschreitet, und ermöglicht damit ein Drehen des Rotors innerhalb seiner zulässigen Betriebsgrenzen durch die Reduzierung seiner Geschwindigkeit. Der Betrieb einer herkömmlichen Windkraftanlage unter solchen Bedingungen wäre im Vergleich dazu nicht mehr möglich. Der Wirkungsgrad der Düsen kann durch die Änderung des Drucks der Medien in diesem Beispiel des Wassers und direkt beeinflusst werden. Die Anbringung der Düsen auf der Rotorblattvorderseite bzw. Rotorblattrückseite wirkt dabei stabilisierend in Bezug auf eine windkraftbedingt hervorgerufene Verdrehneigung der Rotorblätter. Die größte Drehmomentwirkung der Düsen zum Verlangsamen oder zum Beschleunigen des Windkraftanlagenrotors ist in dem Fall erreicht, wenn sich die Düsen an den Enden der Rotorblätter befinden. Neben der Anbringung von Düsen mit einer konstanten Ausströmungsrichtung des Medium und / oder einer konstanten Düsenöffnungsgröße ist auch die Verwendung verstellbarer Düsen möglich, durch die sowohl die Ausströmungsrichtung und / oder auch die Größe der Düsenöffnung veränderbar ist.

### Beispiel 3

Eine Reihe von multifunktionalen Windkraftanlagen, die in einer Gegend mit intensiver landwirtschaftlicher Produktion platziert sind, ermöglichen mehrere positive Wirkungen. Zusätzlich zu einer künstlichen Bewässerung, wie sie bereits in Beispiel 2 beschrieben ist, können diese Windkraftanlagen den Kahlfrost dadurch vermeiden, dass die Düsen bei niedrigen Temperaturen unter dem Gefrierpunkt in Betrieb genommen werden und durch das mittels der Düsen versprühte Wasser Kunstschnee erzeugen, unter dem keine Gefahr eines Kaltfrostes mehr gegeben ist. Ebenso können multifunktionelle Windkraftanlagen bei Frost oder niedrigen Temperaturen zur Blütezeit von Obstbäumen, Sträuchern oder Weintrauben das Gefrieren der Blüten durch Schaffung einer Wasserbarriere auf den Blüten vermeiden. Für einen noch effizienteren Betrieb dieser Windkraftanlagen kann Wasserdampf als Medium verwendet werden, wobei der Dampf auch durch die von der Windturbine erzeugte Stromenergie erzeugt werden kann. Zur Erzeugung des Wasserdampfes ist das Medium temperierbar. Eine Temperierung kann aber auch zum Schutz gegen ein Zufrieren der Düsen verwendet werden.

### Beispiel 4

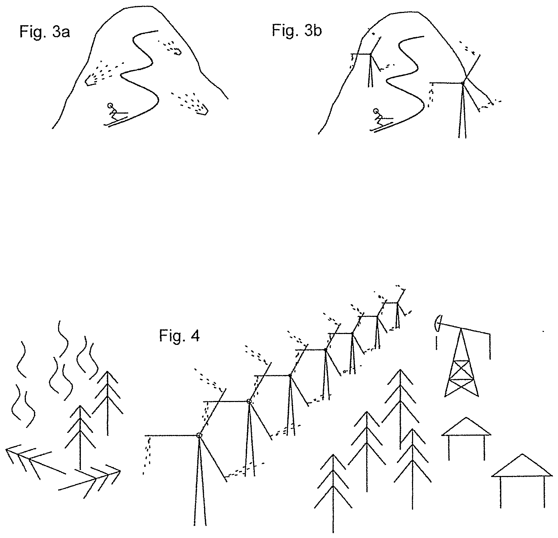

Multifunktionale Windkraftanlagen könnten auch bisher verwendete Schneekanonen ersetzen. Die Produktion von Kunstschnee stellt den größten Kostenfaktor der Skigebiete dar. Bei einer alternativen Investition in multifunktionale Windkraftanlagen könnten diese den Kunstschnee erzeugen, wobei einige ihrer Masten zusätzlich noch als Skiliftstütze dienen könnten. Zudem könnten die Windkraftanlagen ganzjährig Strom liefern bei einer zweigleisigen Nutzung des Skigebiets als beispielsweise Mountainbike-Downhill-Rennpiste während der Zeit außerhalb der Wintermonate. Die Figuren 3a und 3b zeigen ein herkömmlich betriebenes Skigebiet mit Schneekanonen und ein Skigebiet mit erfindungsgemäßen Windkraftanlagen. Zur Erzeugung des Kunstschnees ist das Medium temperierbar.

### Beispiel 5

Multifunktionale Windkraftanlagen, wie in Fig. 4 dargestellt, könnten eine Feuer-Barriere z. B. in Waldgebieten oder an einen Wald angrenzenden Gebieten bilden, um potenziell bedrohte Gebiete vor Bränden zu schützen. Bei potentieller Feuergefahr aufgrund starker Trockenheit, könnten damit gebildete Korridore bewässert werden, um Bränden vorzubeugen. Im Fall eines bereit entstandenen Brandes könnte das Wasser mit anderen unbrennbaren Stoffen zerstäubt werden. Während des Betriebs von Windkraftanlagen und in Zeiten mit überschüssiger Stromenergie, könnte man, vor allem in unzugänglichen und schwer erreichbaren Gebieten, das Hochpumpen von Wasser in entsprechende Reservoirs durchführen. Dieses Wasser könnte dann dazu dienen, entweder direkt beim Löschen der Brände verwendet zu werden oder präventiv zur Bewässerung von schwer zugängigen und brandgefährdeten Gebieten. In Gebieten mit hoher Brandgefahr, wie z. B. bei der Förderung von Öl aus entsprechenden Ölquellen, Raffinerien oder Ähnlichem, könnten die multifunktionalen Windkraftanlagen mit noch effektiveren Mischungen von Medien als reinem Wasser gegen die Feuergefahr versorgt werden.

### Beispiel 6

Die multifunktionale Windkraftanlage kann auch zur Salzgewinnung aus Meerwasser genutzt werden. Durch das mehrfache Sprühen vom Salzwasser, das zur Salzgewinnung gedacht ist, erhöht sich die Verdunstung dieses Wassers und beschleunigt so den Salzproduktionsprozess. Ein zusätzlicher Gewinn ist dabei auch die so gewonnene Stromenergie selbst, was ein ökologisch und ökonomisch vorteilhaftes Pumpen bei gleichbleibender Qualität des Produktes darstellt.

### Beispiel 7

Der Einsatz multifunktionaler Windkraftanlagen in größeren Flächen und Gebieten könnte dazu beitragen, das Mikroklima dieser Gebiete zu verändern. Mit Hilfe der Energie aus den Windkraftanlagen könnte das Wasser über weite Strecken bis in die Trockengebiete im Landesinneren transportiert werden. Im Extremfall könnte auch Meerwasser transportiert werden, dem auf seinem Weg mit Hilfe der Windkraftanlagen das Salz entzogen wird, so dass es zur Bewässerung genutzt werden kann. Wüstenartige Gebiete und Binnenland sind durch Wasserknappheit und oft auch einen großen Unterschied der Tag- und Nachttemperaturen gekennzeichnet. Die multifunktionalen Windkraftanlagen wären in der Lage, diese kritischen Extreme zu mildern. In der Nacht könnte Kunstschnee produziert werden, wodurch der Frost reduziert würde, und am Tag würde der Kunstschnee durch sein Schmelzen die Hitzetemperaturen mildern.

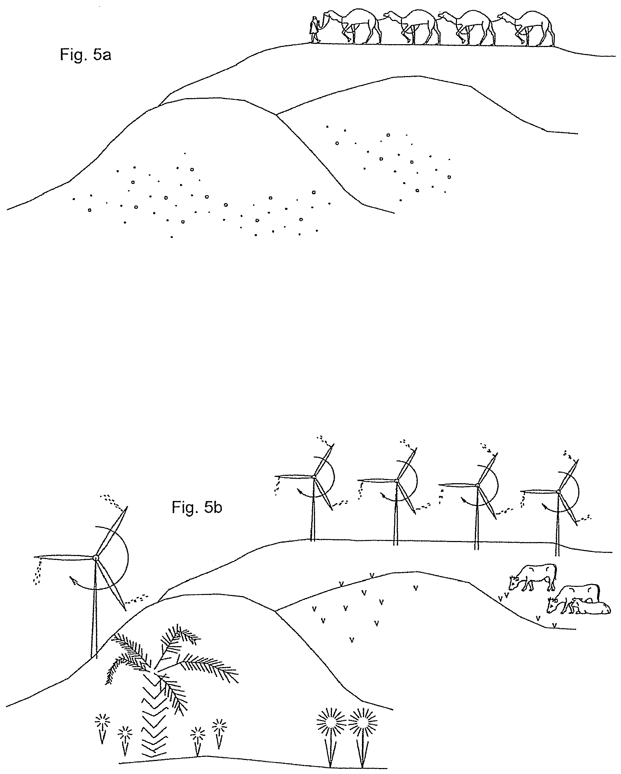

Dies würde helfen, ein geeigneteres Mikroklima für eine vielfältigere Flora und Fauna zu schaffen. Die Figuren 5a und 5b zeigen ein wüstenartiges Gebiet und ein ehemaliges wüstenartiges Gebiet, das mit Hilfe der erfindungsgemäßen Windkraftanlagen nutzbar gemacht werden kann, und zwar bei extrem tiefen Nachttemperaturen und extrem hohen Tagestemperaturen. Bei der Ausführungsform gemäß Figur 5b berücksichtigt die spezifische Wärme von Wasser, so dass der in der Nacht erzeugte Schnee während des Tages schmelzen kann und dass Mikroklima des Gebiets beeinflussen kann.

### Beispiel 8

Die globale Erwärmung bewirkt das schnelle Abschmelzen der Gletscher und verursacht die Bildung von großen Wetterschwankungen, hohen Temperaturen und Trockenheit, aber auch großen Regen und Überschwemmungen. Multifunktionale Windkraftanlagen könnten zu einer leichten Abschwächung dieser Auswirkungen in den Gletschergebieten und den Gebieten der Polarregionen beitragen und sie können auch in unserem geographischen Breitengrad platziert werden. Bei umfangreicher Verwendung solcher Windkraftanlagen, könnte beispielsweise die Ausnutzung der latenten Wärme des Wassers einen kleinen Beitrag zur Abmilderung der extremen Veränderungen bilden. Bei Umwandlung des Wassers in Kunstschnee würden die Fröste gemildert und anschließend bei seiner Erwärmung würde durch die Luftabkühlung aufgrund des Schmelzens des künstlichen Schnee das Abschmelzen der Gletscher verringert, was letztendlich, wenn auch in sehr geringem Umfang, zu einer Verminderung der Klimaschwankungen führen würde.

Die multifunktionale Windkraftanlage kann als Soloanlage, insbesondere zur Stromerzeugung, eingesetzt werden. Ihr Haupteinsatzbereich wird jedoch in einer Systemgruppierung mehrerer Windkraftanlagen gesehen, so dass neben der reinen Stromerzeugung auch einige der anderen möglichen Funktionalitäten genutzt werden können. Dabei kann die Erzeugung von Strom eine sekundäre Funktion darstellen, welche nur die Rentabilität der Investition sichert, wobei beispielsweise die Erzeugung vom Kunstschnee oder der Brandschutz den Haupteinsatzzweck darstellt.

## Patentansprüche

1. Windkraftanlage aufweisend mindestens einen Rotor mit entweder horizontaler oder vertikaler Drehachse und mit mindestens einem Rotorblatt,
**dadurch gekennzeichnet,**
**dass** sie mindestens eine Düse und mindestens ein Zufuhrmittel eines Mediums aufweist, das durch die Düse freigesetzt wird.

2. Windkraftanlage nach Anspruch 1,
**dadurch gekennzeichnet,**
**dass** die Düse an dem Rotorblatt des Rotors angeordnet ist und
**dass** sie entweder in Drehrichtung oder gegen die Drehrichtung des Rotors gerichtet ist.

3. Windkraftanlage nach einem der vorherigen Ansprüche,
**dadurch gekennzeichnet,**
**dass** das Zufuhrmittel starr und / oder flexibel und röhrenartig ist und
**dass** das Zufuhrmittel mindestens durch die Rotordrehachse und wahlweise durch das Rotorblatt geführt ist.

4. Windkraftanlage nach einem der vorherigen Ansprüche,
**dadurch gekennzeichnet,**
**dass** die Düse fest oder drehbar positioniert ist, um die Richtung des ausströmenden Mediums zu ändern, und
**dass** ihre Düsenöffnung konstant oder verstellbar ist.

5. Windkraftanlage nach einem der vorherigen Ansprüche,
**dadurch gekennzeichnet,**
**dass** sie eine Pumpe und / oder Kompressor zur Erhöhung des Druckes des Mediums aufweist und / oder
**dass** das Medium temperierbar ist.

6. Windkraftanlage nach einem der vorherigen Ansprüche,
**dadurch gekennzeichnet,**
**dass** die Düse an dem Rotorblatt an dessen Vorderseite und / oder Rückseite angeordnet ist.

7. Windkraftanlage nach einem der vorherigen Ansprüche,
**dadurch gekennzeichnet,**
**dass** die Düse an dem Rotorblatt an einer Stelle angeordnet ist, an der sie ein großes Drehmoment erzeugt.

8. Windkraftanlage nach einem der vorherigen Ansprüche,
**dadurch gekennzeichnet,**
**dass** das Medium flüssig oder gasförmig ist, feine Feststoffpartikel aufweist oder eine Mischung davon ist.
